# EUROPÄISCHE PATENTSCHRIFT

(11) **EP 1 242 786 B1**
(45) Veröffentlichungstag und Bekanntmachung des Hinweises auf die Patenterteilung: **24.08.2005**
(21) Anmeldenummer: 00993638.6
(22) Anmeldetag: 12.12.2000
(51) Int. Cl.: G01B 11/25, G06K 19/06

(54) **VERFAHREN ZUR ERMITTLUNG VON DREIDIMENSIONALEN OBERFLÄCHENKOORDINATEN**
METHOD FOR DETERMINING THREE-DIMENSIONAL SURFACE COORDINATES
PROCEDE PERMETTANT DE DETERMINER DES COORDONNEES DE SURFACE TRIDIMENSIONNELLES

(30) Priorität: 27.12.1999 DE 19963333
(43) Veröffentlichungstag der Anmeldung: 25.09.2002
(73) Patentinhaber: SIEMENS AKTIENGESELLSCHAFT, 80333 München (DE)
(72) Erfinder: HOFFMANN, Christian, 81545 München (DE)
(86) Internationale Anmeldenummer: PCT/DE2000/004417
(87) Internationale Veröffentlichungsnummer: WO 2001/048438

(56) Entgegenhaltungen:
- US-A- 4 668 094
- US-A- 4 948 258
- GRIFFIN P M ET AL: "GENERATION OF UNIQUELY ENCODED LIGHT PATTERNS FOR RANGE DATA ACQUISITION" PATTERN RECOGNITION,US,PERGAMON PRESS INC. ELMSFORD, N.Y, Bd. 25, Nr. 6, 1. Juni 1992 (1992-06-01), Seiten 609-616, XP000290629 ISSN: 0031-3203
- MORANO R A ET AL: "SHORT PAPERS STRUCTURED LIGHT USING PSEUDORANDOM CODES" IEEE TRANSACTIONS ON PATTERN ANALYSIS AND MACHINE INTELLIGENCE,US,IEEE INC. NEW YORK, Bd. 20, Nr. 3, 1. März 1998 (1998-03-01), Seiten 322-327, XP000767921 ISSN: 0162-8828
- SALVI J ET AL: "A robust-coded pattern projection for dynamic 3D scene measurement" PATTERN RECOGNITION LETTERS,NORTH-HOLLAND PUBL. AMSTERDAM,NL, Bd. 19, Nr. 11, 1. September 1998 (1998-09-01), Seiten 1055-1065, XP004142894 ISSN: 0167-8655
- BATLLE J ET AL: "Recent progress in coded structured light as a technique to solve the correspondence problem - image segmentation techniques" PATTERN RECOGNITION,US,PERGAMON PRESS INC. ELMSFORD, N.Y, Bd. 31, Nr. 7, 31. Juli 1998 (1998-07-31), Seiten 963-982, XP004131001 ISSN: 0031-3203

## Beschreibung

Die Erfindung betrifft eine dreidimensionale optische Vermessung der Oberfläche von Gegenständen. Dies spielt eine besondere Rolle bei der Konstruktion, beispielsweise im Nachbau, bei der Fertigungskontrolle, insbesondere zur Qualitätsüberwachung, im Re-Engineering, wie Reparaturen, Erweiterungen von bestehenden Maschinen und Anlagen, eine große Rolle. Zunehmend wird sie auch bei nichttechnischen Objekten angewandt, wie beispielsweise bei der Qualitätskontrolle von Lebensmitteln oder bei der Identifizierung und Authentifizierung von Personen. Weitere Einsatzgebiete sind dreidimensionale Modellierung von Objekten für virtuelle Realität, der Multimedia- und Spielebereich.

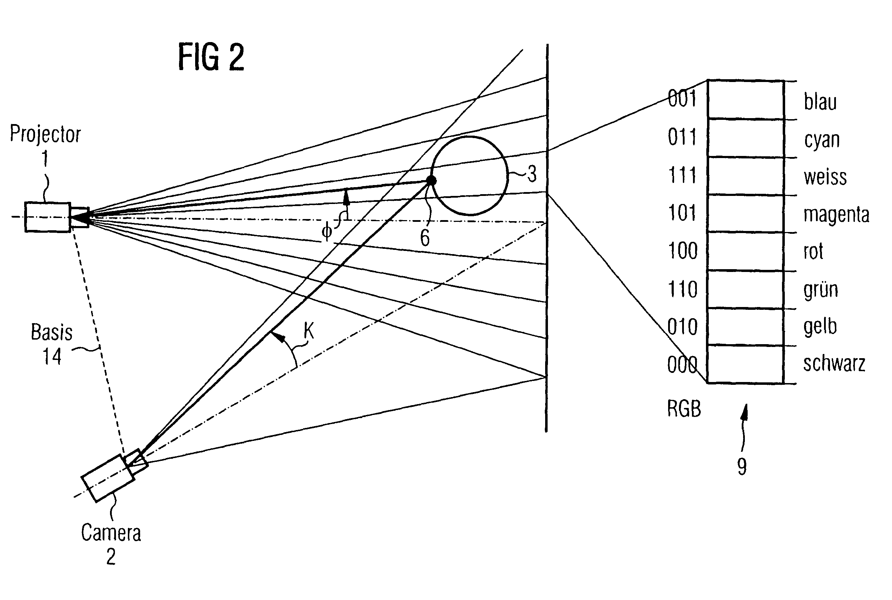

Für die dreidimensionale Vermessung von Gegenständen wird seit vielen Jahren das Prinzip des "codierten Lichtansatzes" (CLA) verwendet. Dabei beleuchtet ein Projektor ein Objekt nacheinander mit verschiedenen Lichtmustern, mit strukturiertem Licht. Eine Kamera nimmt Bilder des so beleuchteten Objektes auf. Projektor, Kamera und Objektpunkt bilden dabei ein Dreieck. Zur Berechnung der Punktkoordinaten auf der Objektoberfläche wird die Triangulation eingesetzt. Voraussetzung dafür ist, daß die räumlichen Positionen von Projektor und Kamera in einem festen Koordinatensystem vorher bekannt sind. Außerdem muß für jeden Punkt des Objektbildes ein Winkel Φ bekannt sein, unter dem der Projektor den Objektpunkt beleuchtet (Fig. 2). Die anfangs bekannten Positionsdaten werden durch einen Kalibriervorgang gewonnen, der zu einem Objektpunkt zugehörige Kamerawinkel κ des Sichtstrahles der Kamera ist durch die Bildpunktkoordinaten und durch die Daten aus der optischen Kamerakalibrierung bekannt.

Der "Codierte Lichtansatz" löst die Bestimmung des Winkels Φ dadurch, daß nacheinander eine Reihe von streifenförmigen Lichtmustern mit variierender Streifenbreite auf das ruhende Objekt projiziert wird und davon jeweils Bilder aufgenommen werden und daß die hellen und dunklen Bildpunkte des so beleuchteten Objektes für jeden Bildpunkt getrennt zu einer Codierung zusammengesetzt werden, so daß aus der Codierung auf den Projektionswinkel Φ geschlossen werden kann.

Weil bei diesem Verfahren jeder Objektpunkt während sämtlicher Bildaufnahmen mit den verschiedenen projizierten Mustern seine Lage beibehalten muß, eignet dieses Verfahren sich gut für statische, unbewegte Objekte, jedoch nicht für bewegte oder sich verformende Objekte. Demnach ist der Einsatz bei der Personenidentifizierung für Gesichter oder andere Körperteile oder bei bewegten Objekten auf einer Transporteinrichtung nicht zu empfehlen. Zur Verbesserung des Verfahrens wurden verschiedenartige Vorschläge gemacht.

In der Literaturstelle [1] wird vorgeschlagen, nur ein einziges Muster zu projizieren und dieses Muster aus Gruppen von farbigen vertikalen Streifen zusammenzusetzen, die aus Teilgruppen bestehen, welche im gesamten Muster einzigartig sind und dadurch im Bild einer Farbkamera identifiziert werden können. Wenn diese Teilgruppen nicht gestört oder beschädigt werden, kann aus ihnen für jeden Farbstreifen die Projektor-Lichtebene bestimmt und die Triangulation durchgeführt werden. Je länger jedoch die Teilgruppen sind, um so wahrscheinlicher sind Störungen, die beispielsweise durch Tiefensprünge oder Verdeckungen am Objekt entstehen. Dies führt zu nicht oder falsch identifizierten Gruppen und damit zu Fehlern bei der dreidimensionalen Koordinatenbestimmung.

In der Literaturstelle [2] ist bei Untersuchungen bei Gruppen der Länge 6 mit vier Farben bei simulierten Störungen der Muster herausgefunden worden, daß bis zu 20% aller Streifen nicht bestimmt werden konnten und bis zu ca. 8% falsch entSchieden wurden. Daher muss diese Methode der Bestimmung der Streifennummer aus horizontalen Gruppen von vertikalen Farbstreifen als nicht zufrieden stellend bewertet werden.

Allgemein kann gesagt werden, dass zur Bestimmung des Projektionswinkels eines Oberflächenpunktes eines Objektes dessen Umgebung betrachtet werden muss, wenn nur ein einziges Muster projiziert werden soll. Je größer die Umgebung eines Bildpunktes ist, die zur Bestimmung (Decodierung) des Projektionswinkels nötig ist, desto größer ist das Risiko der Beschädigung der Codierung durch Tiefensprünge oder Verdeckungen.

Eine Übersicht über bekannte Verfahren zur dreidimensionalen Vermessung bietet die Literaturstelle [3].

In der Veröffentlichung D1 Griffin, P.M. et al.: "Generation of Uniquely Encoded Light Patterns for Range Data Acquisition" ist ein Verfahren zur Erzeugung von codierten Mustern bekannt, die zur Erzeugung von strukturierten Lichtsystemen verwendbar sind. Diese Muster bestehen aus einer Matrix von gefärbten Kreisen, die auf eine Objektszene durch Hintergrundbeleuchtung aufgebracht wird. Mittels einer einzigen Kammer wird das Bild der projizierten farbigen Lichtstrahlen aufgenommen und Abstandsdaten für das Objekt sind ermittelbar. Da das Lichtmuster codiert ist, kann leicht die Korrespondenz eines projizierten Strahles mit Abbildungsstrahlen bestimmt werden und somit kann ein Höhenrasterbild erzeugt werden.

Der Erfindung liegt die Aufgabe zugrunde, eine zuverlässige Lichtcodierung zur dreidimensionalen Bestimmung von Oberflächenkoordinaten eines Objektes bei Verwendung nur eines einzigen projizierten Musters bereitzustellen, womit Verfälschungen durch fehlerhafte Auswertung der Codierung oder durch eine Bewegung des Objektes eliminiert sind.

Die Lösung dieser Aufgabe geschieht durch die Merkmalskombination entsprechend Anspruch 1.

Vorteilhafte Ausgestaltungen können den abhängigen Ansprüchen entnommen werden.

Die Erfindung beruht darauf, dass zweidimensionale Farbmuster aus einzelnen Musterelementen zusammengesetzt werden können, die sich farblich oder in ihrer spektralen Zusammensetzung in einer vorgegebenen At unterscheiden lassen und bei denen der Projektionswinkel Φ im aufgenommenen Bild des mit dem Farbmuster beleuchteten Objektes eindeutig rekonstruiert und jedem Musterelement zugeordnet werden kann. Dies geschieht, indem die Farbe bzw. die spektrale Zusammensetzung eines ausgewählten Musterelementes gemessen wird und indem diese Farbe oder spektrale Zusammensetzung mit einem der in einer Zeile, welche beispielsweise ungefähr horizontal ausgerichtet ist, benachbarten Musterelemente und mit einem der in einer Nachbarzeile befindlichen benachbarten Musterelemente verglichen wird. Die Codierung für ein Musterelement besteht dabei also aus der Farbe des Musterelementes selbst und aus dem Farb-oder Spektral-Unterschied zu einem seiner Nachbarn in vorzugsweise horizontaler Richtung und einem seiner Nachbarn in einer Richtung, die ungefähr senkrecht dazu liegt. Damit ist die zur Codierung nötige lokale Umgebung auf ein Minimum, namlich auf zwei der unmittelbaren Nachbarn beschränkt. Die Codierung ist derart ausgelegt, daß in einem Farbmuster die Kombination des einen aktuell betrachteten Musterelementes mit einem seiner unmittelbar benachbarten Elemente in der Zeile und mit einem seiner unmittelbar benachbarten Elemente aus einer Nachbarzeile in Richtung der Zeile einzigartig ist.

Die geometrische Form der Musterelemente kann beliebig sein, beispielsweise polygonförmig (Dreieck, Viereck, Sechseck ...) oder auch kreisformig. Die Richtungen der vorzugsweise horizontalen Nachbarschaft innerhalb einer Zeile und der vorzugsweise vertikalen Nachbarschaft in Richtung auf eine Nachbarzeile müssen nicht aufeinander senkrecht stehen, können sich jedoch um 90° unterscheiden. Es ist vorteilhaft, ein Farbmuster aus Musterelementen zusammenzusetzen, die längliche Rechtecke darstellen. Insbesondere werden kurze, vertikal stehende Streifen eingesetzt, die sich in horizontaler und in vertikaler Richtung systematisch in ihren Farben oder in ihrer spektralen Zusammensetzung unterscheiden. Werden z. B. acht verschiedene Farben verwendet, beispielsweise additiv aus den drei Grundfarben rot, grün, blau zusammengesetzte, die mit den Zahlen 0, 1, 2, ... 7 bezeichnet werden, so kann ein Teil des Farbmusters aus der horizontalen Anordnung von acht vertikalen Streifenabschnitten mit den Farben 0, 1, 2, 3, 4, 5, 6, 7 bestehen, und ein anderer Teil des Farbmusters aus der Anordnung 0, 7, 6, 5, 4, 3, 2, 1. Diese beiden Teile lassen sich alleine durch einen Vergleich mit einem der horizontalen Nachbarn unterscheiden, weil bei der ersten Gruppe der Unterschied der Farbnummern aufsteigend und bei der zweiten Gruppe (modulo 8!) absteigend ist. Nebeneinander angeordnet ergibt sich z. B. die Farbsequenz der Länge 16: "0, 1, 2, 3, 4, 5, 6, 7, 0, 7, 6, 5, 4, 3, 2, 1". Diese kann periodisch mehrmals nebeneinander, also in einer Zeile wiederholt werden. Um die verschiedenen Perioden des gesamten Farbmusters voneinander unterscheiden zu können, wird oberhalb und unterhalb dieser Streifensequenz, d. h. in benachbarten Zeilen eine andere Streifensequenz angeordnet, deren Farbnummern sich in vertikaler Richtung durch verschiedene Differenzen der Farbnummern unterscheiden lassen.

Um die Anzahl der Musterelemente bzw. deren Größe an die Oberflächenstruktur und an die geforderte Genauigkeit der Auflösung anzupassen, wird das Farbmuster mit entsprechend langen Zeilen mit wiederholten Sequenzen und aus einer Vielzahl von zumindest zwei unterschiedlich ausgebildeten Nachbarzeilen aufgebaut. Aus dem zweidimensionalen Farbmuster läßt sich im aufgenommenen Kamerabild innerhalb der Sequenzen, also innerhalb einer Zeile die horizontale Position eines Oberflächenpunktes innerhalb der Sequenz und damit der Projektionswinkel Φ bestimmen. Die horizontale Position eines Musterelementes ist also direkt umrechenbar auf den Projektionswinkel Φ. Insgesamt ist jede Farbe eindeutig klassifizierbar und von jeder anderen unterscheidbar.

Eine vorteilhafte Ausgestaltung der Erfindung sieht vor, zwischen zwei Zeilen einen Trennstreifen mit einer von sämtlichen Musterfarben unterschiedlichen Farbe oder spektralen Zusammensetzung zu plazieren. In dieser Variante ist die Farbgleichheit zweier in Nachbar-Zeilen unmittelbar benachbarter Musterelemente zugelassen.

Im folgenden werden anhand von schematischen Figuren Ausführungsbeispiele beschrieben.
- Figur 1: zeigt Mustersequenzen S1 und S2 sowie ein daraus aufgebautes Farbmuster,
- Figur 2: zeigt ein Schema zur Berechnung von dreidimensionalen Koordinaten an einer Objektoberfläche mit einer Farbmusterprojektion,
- Figur 3: zeigt einen Ausschnitt aus einem Farbmuster,
- Figur 4: zeigt einen Ausschnitt aus einem Farbmuster, wobei zwischen den Zeilen Trennstreifen vorhanden sind.

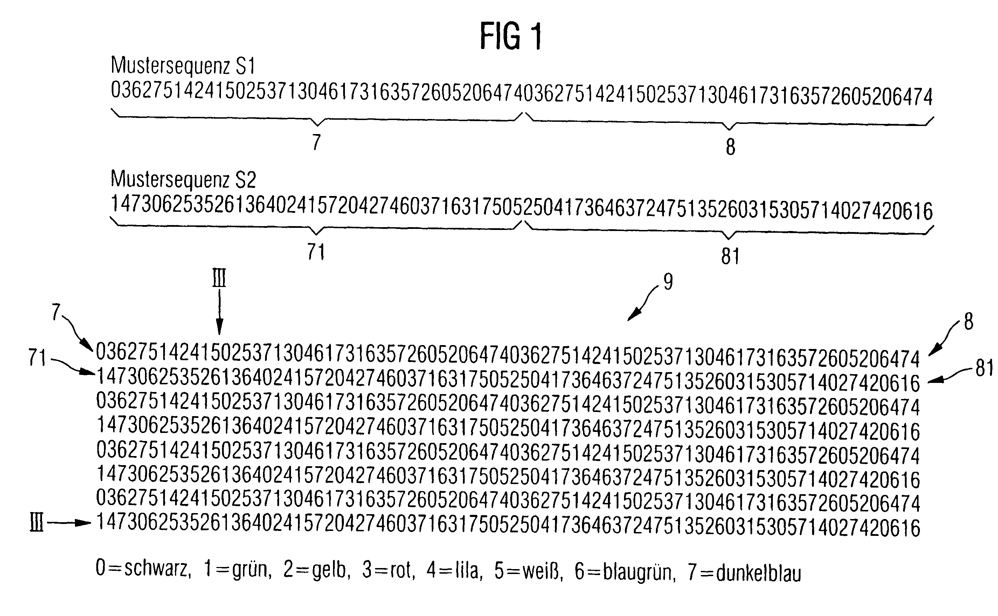

In der Figur 1 sind im oberen Teil zwei Mustersequenzen S1 und S2 dargestellt. Die Sequenz S1 besteht hier aus zwei gleichen Hälften 7,8. Die Sequenz S2 besteht aus zwei ungleichen Teilen 71,81. Die Zahlen entsprechen jeweils einer im Farbmuster vorhandenen Farbe, wie es im unteren Teil der Figur 1 dargestellt ist. In dem im mittleren Teil der Figur 1 dargestellten Farbmuster 9 sind die Mustersequenzen S1 und S2 als Doppelzeile insgesamt viermal untereinander gereiht. In dieser Mustersequenz ist die horizontale Differenz zwischen zwei benachbarten Musterelementen 10 größer als 1. Die vertikale Differenz ist für die erste Hälfte (7,71) entweder 1 oder -7, was bei 8 verschiedenen Farben gleichwertig ist. Die in Figur 1 dargestellten Teilsequenzen 7,8 der Mustersequenz S1 enthalten alle Variationen, d.h. Teilmengen unter Beachtung der Reihenfolge, von zwei aus acht Ziffern mit horizontalen Differenzen, die ≠ 1 sind. Auch die um in der vertikalen Differenz 1, 2 oder 3 (modulo 8) erhöhten Nummern haben die genannten Eigenschaften, so daß sich die Mustersequenz S2 als Nachbarzeile zur Sequenz S1 eignet, damit sich durch den Vergleich eines Musterelementes mit unmittelbar benachbarten Musterelementen aus benachbarten Zeilen ein Farbunterschied ergibt, mit dessen Hilfe sich die erste Hälfte 7,71 der Sequenzen S1 und S2 von der zweiten Hälfte 8,81 unterscheiden läßt, so daß trotz der Wiederholung der Teilsequenz 7,8 jedes Musterelement durch Vergleich der Elemente in der Nachbarzeile in der Gesamtsequenz in Zeilenrichtung eindeutig lokalisierbar ist. Das Farbmuster 9 kann um weitere Sequenzen in Zeilenrichtung erweitert werden, welche andere vertikale Farbnummerndifferenzen, z.B. 0, 3 und 4, aufweisen. Nachdem in einem Farbmuster 9 jeweils unterschiedliche Farben aneinanderstoßen und Grenzbereiche oder Grenzzonen bilden, kommt es darauf an, die Farbunterschiede zu detektieren. Soll beispielsweise anstelle der vertikalen Differenz von 1 oder -7 die vertikale Differenz = 0 sein, d. h. die Farbgleichheit zwischen vertikal benachbarten Musterelementen 10 wird zugelassen, so müssen in vorteilhafter Weise horizontale Trennstreifen 13 zwischen den Zeilen 4 eingefügt sein. Diese Trennstreifen weisen eine zu sämtlichen Farben der Musterelemente 10 unterschiedliche Farbe auf. Die Farbe der Trennstreifen kann vorzugsweise schwarz sein. In diesem Fall kann beispielsweise, wenn der vertikale Unterschied zwischen benachbarten Musterelementen = 0 ist, die Unterscheidung zwischen den Musterelementen benachbarter Zeilen vorgenommen werden, weil beispielsweise schwarze Trennstreifen 13 die Grenzen zwischen Musterelementen in vertikaler Richtung darstellen.

Zur Decodierung der absoluten Position eines Musterelementes 10 innerhalb einer Sequenz im Kamerabild ist zunächst seine Farbe zu bestimmen. Das Ziel ist, die Bestimmung des Projektionswinkels Φ. Um im Bild seine Nachbarn zu finden, sind die Konturen des am Objekt 3 projizierten und durch die Kameraoptik abgebildeten Musterelementes zu bestimmen. Dieses ist im Bild allgemein nicht rechteckig und nicht genauso wie im projizierten Muster ausgerichtet. Die zu detektierenden Konturen sind die Grenzen zu den benachbarten Musterelementen 10. Durch eine vorausgegangene Kalibrierung von Projektor 1 und Kamera 2 und durch die vorzugsweise horizontale Ausrichtung der Zeilen im Projektionsmuster kann die Ausrichtung der Musterlelemente und Sequenzzeilen im Bild rekonstruiert werden. Wenn eine der Konturen des Musterelementes überschritten wird, verändert sich der Farbwert bzw. die spektrale Zusammensetzung. Dieser bzw. diese kann zum Vergleich der Farbnummern mit dem Nachbarelement gemessen werden.

Bei Störungen und bei Fällen unsicherer Entscheidung kann auch der Vergleich der berechneten dreidimensionalen Koordinaten mit denen der Umgebung eines Objektpunktes 6 zur Vermeidung oder Korrektur von Fehlern beitragen. Dies entspricht einem Abgleich der errechneten Oberfläche im dreidimensionalen Modell.

Anstelle eines herkömmlichen Projektors mit Diapositiv kann auch ein steuerbarer Bildmatrix-Projektor verwendet werden, welcher durch ein Videosignal gesteuert wird und mit einer aktiven Matrix von Lichtmodulatoren das im Videosignal enthaltene Musterbild erzeugt und mit einer Optik auf das Objekt 3 projiziert. Die Lichtmodulatoren der bilderzeugenden gesteuerten Matrix können LCD-Elemente für Durchlichtdämpfung oder solche mit reflektierenden Schichten sein. Es können auch Matrizen von Mikrospiegeln, Laserdioden oder anderen lichterzeugenden Elementen eingesetzt werden. Schließlich kann ein flächiges Farbmuster 9 auch durch das zeilenweise Bewegen, Scannen, wie beim Fernsehen, einer einzigen Lichtquelle über einen Raumsektor erzeugt und projiziert werden. Die verschiedenen Technologien zur Lichtmodulation können in solche mit Lichterzeugung, mit Lichtdämpfung beim Durchgang von Licht, mit Lichtreflexion oder durch zweidimensionales Scannen unterteilt werden.

Ein Vorteil der Mustererzeugung mit einem steuerbaren Matrixprojektor im Vergleich zur Projektion eines festen Diapositives liegt darin, daß nach Auswertung eines zuerst aufgenommenen Referenzbildes das anschließend erzeugte Muster in seiner lokalen Helligkeit, seinem Kontrast oder in der Anzahl oder Auswahl der Farben gesteuert und damit optimal an die Eigenschaften des Objektes in Bezug beispielsweise auf seine Helligkeit oder Farbe angepaßt werden kann.

Figur 2 zeigt ein Schema für eine dreidimensionale Koordinatenvermessung durch Triangulation mit Farbprojektion. Zur Triangulation sind der Projektor 1, die Kamera 2 und das Objekt 3 an den Ecken eines Dreiecks angeordnet. Die Strecke zwischen Projektor 1 und Kamera 2 wird als Basis 14 bezeichnet und ist bekannt. Der Projektor 1 bildet ein Farbmuster 9 auf der Oberfläche eines Objektes 3 ab. Zu vermessen sind eine Vielzahl von Oberflächenpunkten 6 des Objektes 3, wobei jeweils die dreidimensionalen Koordinaten des Objektpunktes ermittelt werden. Zur Berechnung wird vorzugsweise das Verfahren der Triangulation eingesetzt. Bei diesen Berechnungen sind zum einen der Kamerawinkel κ und zum anderen der Projektionswinkel Φ wichtig. Durch den Winkel Φ kann jedem Objektpunkt 6 eine Position relativ zu Projektor 1 und Kamera 2 zugeordnet werden. Der zugehörige Winkel κ des Sichtstrahles der Kamera ist durch die Bildpunktkoordinaten und die Daten aus der optischen Kamerakalibrierung bekannt. Die in Figur 2 durch ein Farbmuster 9 in Form einer aufeinander folgenden Reihe verschiedener Farben angegebene Beleuchtung stellt eine Codierung dar, mittels der die Position eines Musterelementes in dieser Sequenz eindeutig ermittelbar ist. Die Buchstaben R-G-B stehen für Rot-Grün-Blau.

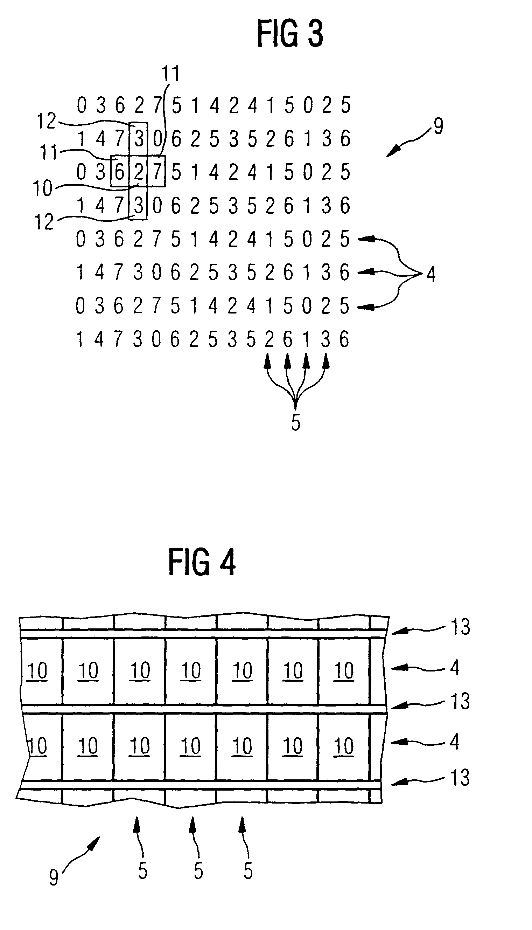

Figur 3 zeigt einen Ausschnitt entsprechend dem Ausschnitt III-III in Figur 1. Dabei sind die entsprechend der Codierung in Bezug zu bringenden Elemente des Farbmusters 9 gekennzeichnet. Ein aktuell betrachtetes Musterelement 10 ist benachbart von Musterelementen 11, die in diesem rechtwinkligen System horizontal benachbart sind und von Musterelementen 12, die vertikal benachbart sind, also in benachbarten Zeilen auftreten. Die Zeilen 4 stehen ungefähr senkrecht zu Spalten 5.

Figur 4 zeigt einen Ausschnitt aus einem Farbmuster 9 mit Zeilen 4 und Spalten 5, wobei Musterelemente 10 markiert sind. Durch die zwischen den Zeilen 4 vorhandenen Trennstreifen 13 mit einer zu den Farbelementen unterschiedlichen Farbe wird die Variante der Erfindung angedeutet, die auch eine Farbgleichheit von in Spalten 5 benachbarten Musterelementen zuläßt.

Entsprechend der Erfindung wird ein zweidimensionales Farbmuster, bestehend aus farbigen Musterelementen 10, verwendet, das außer in der Farbe eines Musterelementes auch in den Beziehungen zu den unmittelbaren Nachbarn dieses Musterelementes Informationen enthält, d. h. codiert ist. Durch die Bestimmung dieser Farben zusammen mit den Nachbarschaftsbeziehungen kann auf die Position im Farbmuster zurückgeschlossen werden. Es gelingt damit ein äußerst kompaktes und daher störungssicheres Muster für die Codierung des Projektionswinkels Φ für die dreidimensionale Vermessung durch die aktive Triangulation herzustellen. Somit ist es möglich, durch ein einziges Muster, das mit einem Projektor 1, üblicherweise einem Diaprojektor, auf ein zu vermessendes Objekt projiziert wird, eine Codierung zur Positionserkennung von Objektpunkten 6 aufzubringen. Somit entfällt das Erfordernis, entsprechend dem codierten Lichtansatz mehrfache Belichtungen mit wechselnden Mustern durchzuführen. Entsprechend der Erfindung ist eine einzige Beleuchtung mit diesem einzigen Muster ausreichend. Falls zur Erhöhung der Erkennungssicherheit ein Referenzbild bei gleichmäßiger weißer bzw. spektral gleich verteilter Objektbeleuchtung aufgenommen werden soll, wären maximal zwei Beleuchtungen erforderlich. Die Aufnahme eines Referenzbildes, eines normalen Farbbildes, das die Eigenfarben des Objektes wiedergibt, ist zur Bestimmung der Farben im Bild insbesondere bei farbigen Objekten hilfreich. Bei Objekten mit schwacher Farbvariation, zum Beispiel bei grauen oder weißen Objekten, genügt eine Bildaufnahme des Objektes mit projiziertem Muster für die Ermittlung der dreidimensionalen Koordinaten.

Anwendungsfälle für die Erfindung sind insbesondere die Erfassung der Gesichtsform einer Person, die Gesichtserkennung oder auch die Erkennung von Gesten. Eine Zusammenfassung der Vorteile ergibt folgendes:
- es ist iediglich die Projektion eines einzigen Musters notwendig,
- die Codierung ist durch die Beschränkung auf die allernächsten Nachbarschaftsbeziehungen durch Vergleich in horizontaler und vertikaler Richtung äußerst störungsfrei,
- die horizontale und vertikale Codierung geschieht gleichzeitig,
- durch die Verwendung der waagerecht und senkrecht benachbarten Musterelemente eines aktuell zu detektierenden Musterelementes geschieht weiterhin eine Minimierung des Ortsbereiches bei der Codierung, da diagonal benachbarte Elemente nicht berücksichtigt werden,
- die Codierung ergibt die eindeutige Bestimmung eines Musterelementes im projizierten Farbmuster in Zeilenrichtung und damit die Bestimmung des Projektionswinkels Φ, wobei anschließend durch Triangulation die dreidimensionalen Koordinaten dieses Objektpunktes 6 berechenbar sind,
- die Aufnahme eines Referenzbildes ermöglicht eine Störlichtkompensation, wobei das Referenzbild ohne Einfarbmuster mit gleichmäßiger Beleuchtung aufgenommen wird.

### Literaturhinweise:

[1] K.L. Boyer, A.C. Kak, "Color-Encoded Structured Light for Rapid Active Ranging", IEEE PAMI 9 (1), 1987
[2] H. Hügli, G. Maitre, "Generation and Use of Color Pseudo Random Sequences for Coding Structured Light in Active Ranging", SPIE Vol. 1010 Industrial Inspection, 1988
[3] X. Jiang, H. Bunke, "Dreidimensionales Computersehen", Springer Verlag 1997

## Patentansprüche

1. Verfahren zur Ermittlung von dreidimensionalen Oberflächenkoordinaten mit
- der Beleuchtung eines Objektes (3) mit einem Farbmuster (9) bekannter Struktur durch einen Projektor (1) und der Aufnahme eines Objektbildes durch eine Kamera (2), wobei Farbmuster aus Musterelementen mit jeweils unterschiedlicher Farbe oder jeweils unterschiedlicher spektraler Zusammensetzung des projizierten Lichtes oder einer Kombination daraus bestehen,
- der einmaligen Projektion des Farbmusters (9) auf das Objekt (3) zur Bildaufnahme, wobei das Farbmuster (9) mindestens zwei benachbarte Zeilen (4) mit einer Vielzahl von Musterelementen (10) aufweist, wobei jeweils ein Musterelement (10) sich farblich oder in der spektralen Zusammensetzung des projizierten Lichtes unterscheidet von sowohl einem innerhalb der Zeile benachbarten Musterelement (11), als auch von einem in einer Nachbarzeile befindlichen benachbarten Musterelement (10), womit die Position des Musterelements (10) in der Zeile (4) im Farbmuster (9) des aufgenommenen Bildes eindeutig ermittelt werden kann und diesem Musterelement (10) ein Projektswinkel (Φ) zugeordnet wird, mit dem sich bei bekannter Relativposition zwischen Kamera (2) und Projektor (1) die dreidimensionalen Koordinaten betrachteter Objektpunkte ermitteln lassen.

2. Verfahren nach Anspruch 1, wobei für jedes betrachtete Musterelement (10) die Kombination mit einem seiner unmittelbaren Nachbarn in der Zeile zusammen mit einem seiner unmittelbaren Nachbarn aus einer Nachbarzeile für das Farbmuster in Zeilenrichtung einzigartig ist.

3. Verfahren nach einem der vorhergehenden Ansprüche, wobei unterschiedliche spektrale Zusammensetzungen der Musterelemente (10) im Bereich des ultravioletten oder infraroten Lichtes liegen.

4. Verfahren nach einem der vorangegangenen Ansprüche, wobei Musterelemente (1) einer Zeile (4) in Gruppen zu einer Sequenz zusammengefasst werden.

5. Verfahren nach Anspruch 4, wobei in jeweils einer Zeile mehrere gleiche Sequenzen (7, 8) aneinander gereiht sind.

6. Verfahren nach Anspruch 4, wobei in jeweils einer Zeile mehrere unterschiedliche Sequenzen (71, 81) aneinander gereiht sind.

7. Verfahren nach einem der vorangegangenen Ansprüche, wobei der Umriss der Musterelemente (10) vieleckig ist.

8. Verfahren nach Anspruch 7, wobei Musterelemente rechteckig ausgeführt sind und das Farbmuster (9) senkrecht zueinander ausgerichtete Zeilen (4) und Spalten (5) aufweist.

9. Verfahren nach einem der vorhergehenden Ansprüche, wobei die vertikal benachbarten Zeilen (4) im Farbmuster (9) vertikal mehrmals aneinander gereiht sind.

10. Verfahren nach einem der vorhergehenden Ansprüche, wobei zur Unterscheidung von Musterelementen (10) zwischen 3 bis 64 verschiedene Farben oder spektrale Zusammensetzungen verwendet werden.

11. Verfahren nach einem der vorhergehenden Ansprüche, wobei jeweils zwischen zwei Zeilen Trennstreifen (13) mit einer von sämtlichen Musterfarben unterschiedlichen Farbe oder spektralen Zusammensetzung vorhanden sind.

12. Verfahren nach einem der vorangegangenen Ansprüche, wobei zur Minimierung von Störeffekten durch Umgebungslicht oder durch Objektfarben ein Referenzbild mit gleichmäßig weißer bzw. spektral gleich verteilter Beleuchtung aufgenommen wird.

13. Verfahren nach Anspruch 12, wobei als Projektor ein Rasterbildprojektor eingesetzt wird, dessen Bildpunkte in Farbe und Helligkeit steuerbar sind, so dass nach Auswertung eines zuerst aufgenommenen Referenzbildes das anschließend erzeugte Farbmuster in seiner lokalen Helligkeit, seinem Kontrast oder in der Anzahl oder Auswahl der Farben gesteuert werden kann, um das Muster optimal an Farbe und Helligkeit des Objektes anzupassen.

## Claims

1. Method for determining three-dimensional surface coordinates comprising
- the illumination of an object (3) with a colour pattern (9) of known structure by a projector (1) and the recording of an object image by a camera (2), colour patterns comprising pattern elements having in each case a different colour or in each case a different spectral composition of the projected light or a combination thereof,
- the single projection of the colour pattern (9) onto the object (3) for image recording, the colour pattern (9) having at least two adjacent rows (4) with a multiplicity of pattern elements (10), a respective pattern element (10) differing in colour terms or in the spectral composition of the projected light both from an adjacent pattern element (11) within the row and from an adjacent pattern element (10) situated in an adjacent row, whereby it is possible to unambiguously determine the position of the pattern elements (10) in the row (4) in the colour pattern (9) of the recorded image and this pattern element (10) is assigned a projection angle (Φ), with which, given a known relative position between camera (2) and projector (1), it is possible to determine the three-dimensional coordinates of object points considered.

2. Method according to Claim 1, wherein, for each pattern element (10) considered, the combination with one of its immediate neighbours in the row together with one of its immediate neighbours from an adjacent row for the colour pattern in the row direction is unique.

3. Method according to one of the preceding claims, wherein different spectral compositions of the pattern elements (10) lie in the region of ultraviolet or infrared light.

4. Method according to one of the preceding claims, wherein pattern elements (1) of a row (4) are combined in groups to form a sequence.

5. Method according to Claim 4, wherein a plurality of identical sequences (7, 8) are strung together in a respective row.

6. Method according to Claim 4, wherein a plurality of different sequences (71, 81) are strung together in a respective row.

7. Method according to one of the preceding claims, wherein the contour of the pattern elements (10) is polygonal.

8. Method according to Claim 7, wherein pattern elements are embodied in rectangular fashion and the colour pattern (9) has rows (4) and columns (5) oriented perpendicularly to one another.

9. Method according to one of the preceding claims, wherein the vertically adjacent rows (4) are strung together a number of times vertically in the colour pattern (9).

10. Method according to one of the preceding claims, wherein between 3 and 64 different colours or spectral compositions are used in order to differentiate pattern elements (10).

11. Method according to one of the preceding claims, wherein separating strips (13) having a colour or spectral composition that differs from all the pattern colours are present in each case between two rows.

12. Method according to one of the preceding claims, wherein a reference image with uniformly white or spectrally uniformly distributed illumination is recorded in order to minimize disturbance effects as a result of ambient light or as a result of object colours.

13. Method according to Claim 12, wherein the projector used is a raster image projector whose pixels can be controlled in terms of colour and brightness, so that, after the evaluation of a reference image recorded first, the subsequently generated colour pattern can be controlled in terms of its local brightness, its contrast or in terms of the number or selection of the colours, in order to optimally adapt the pattern to the colour and brightness of the object.

## Revendications

1. Procédé pour la détermination de coordonnées de surface en trois dimensions comprenant :
- l'éclairage d'un objet (3) avec un modèle de couleur (9) de structure connue par un projecteur (1) et l'enregistrement d'une image d'objet par une caméra (2), des modèles de couleur étant constitués d'éléments de modèle avec respectivement une couleur différente ou respectivement une composition spectrale différente de la lumière projetée ou d'une combinaison de ces éléments,
- la projection unique du modèle de couleur (9) sur l'objet (3) pour l'enregistrement de l'image, le modèle de couleur (9) présentant au moins deux lignes (4) voisines avec une pluralité d'éléments de modèle (10), à chaque fois un élément de modèle (10) se différenciant au niveau de la couleur ou dans la composition spectrale de la lumière projetée d'aussi bien un élément de modèle (11) voisin à l'intérieur de la ligne que d'un élément de modèle (10) voisin se trouvant dans une ligne voisine, la position de l'élément de modèle (10) dans la ligne (4) pouvant être déterminée clairement dans le modèle de couleur (9) de l'image enregistrée et un angle de projection (Φ) étant attribué à cet élément de modèle (10), angle avec lequel on peut déterminer, avec une position relative connue entre la caméra (2) et le projecteur (1), les coordonnées en trois dimensions de points d'objet considérés.

2. Procédé selon la revendication 1, la combinaison avec l'un de ses voisins directs sur la ligne conjointement avec l'un de ses voisins directs provenant d'une ligne voisine pour le modèle de couleur dans la direction des lignes étant unique pour chaque élément de modèle (10) considéré.

3. Procédé selon l'une quelconque des revendications précédentes, dans lequel différentes compositions spectrales des éléments de modèle (10) se situent dans la plage de la lumière ultraviolette ou de la lumière infrarouge.

4. Procédé selon l'une quelconque des revendications précédentes, dans lequel des éléments de modèle (1) d'une ligne (4) sont réunis en groupes pour former une séquence.

5. Procédé selon la revendication 4, dans lequel plusieurs séquences (7, 8) identiques sont alignées dans respectivement une ligne.

6. Procédé selon la revendication 4, dans lequel plusieurs séquences (71, 81) différentes sont alignées dans respectivement une ligne.

7. Procédé selon l'une quelconque des revendications précédentes, dans lequel le contour des éléments de modèle (10) est polygonal.

8. Procédé selon la revendication 7, dans lequel des éléments de modèle sont réalisés avec une forme rectangulaire et le modèle de couleur (9) présente des lignes (4) et les colonnes (5) orientées perpendiculairement entre elles.

9. Procédé selon l'une quelconque des revendications précédentes, dans lequel les lignes (4) voisines verticalement dans le modèle de couleur (9) sont alignées verticalement plusieurs fois entre elles.

10. Procédé selon l'une quelconque des revendications précédentes, dans lequel entre 3 et 64 couleurs différentes ou compositions spectrales sont utilisées pour la différenciation d'éléments de modèle (10).

11. Procédé selon l'une quelconque des revendications précédentes, dans lequel à chaque fois des bandes de séparation (13) avec une couleur ou composition spectrale différente de toutes les couleurs modèles sont présentes à chaque fois entre deux lignes.

12. Procédé selon l'une quelconque des revendications précédentes, dans lequel une image de référence avec un éclairage blanc ou réparti uniformément au plan spectral est enregistrée pour la minimisation d'effets perturbateurs par la lumière ambiante ou par des couleurs d'objet.

13. Procédé selon la revendication 12, dans lequel un projecteur d'image tramée est utilisé comme projecteur, projecteur dont les points d'image peuvent être contrôlés au niveau de la couleur et de la luminosité, de sorte que, après l'évaluation d'une l'image de référence enregistrée d'abord, le modèle de couleur généré ensuite peut être contrôlé dans sa luminosité locale, son contraste, ou dans le nombre ou le choix des couleurs, afin d'adapter le modèle de façon optimale à la couleur et à la luminosité de l'objet.
